# EUROPÄISCHE PATENTANMELDUNG

(11) **EP 2 105 906 A1**
(43) Veröffentlichungstag der Anmeldung: **30.09.2009**
(21) Anmeldenummer: 09000086.0
(22) Anmeldetag: 07.01.2009
(51) Int. Cl.: G09B 23/30

(54) **Herstellung eines 3D-Modells**

(30) Priorität: 08.01.2008 DE 102008003537
(71) Anmelder: Brückmann, Jochen C., 45238 Essen (DE)
(72) Erfinder: Brückmann, Jochen C., 45238 Essen (DE)
(74) Vertreter: Schulte & Schulte

(57) **Zusammenfassung**

Ein Verfahren dient zur Herstellung eines dreidimensionalen Modells des Körpers oder eines Teils des Körpers eines im Mutterleib heranwachsenden Kindes. Dabei werden die Konturen des Körpers oder des Teils des Körpers individuell mittels eines Aufnahmegerätes zunächst erfasst. Anhand dieser Daten wird anschließend über eine Fertigungseinheit mechanisch ein dreidimensionales Modell erstellt. Eine Vorrichtung dient zur Durchführung dieses Verfahrens.

## Beschreibung

Die Erfindung betrifft ein Verfahren zur Herstellung eines dreidimensionalen Modells des Körpers oder eines Teils des Körpers eines Menschen und außerdem eine Vorrichtung zur Durchführung dieses Verfahrens.

Bekannt sind diverse unterschiedliche medizinische Geräte und Verfahren zur Darstellung des Körperinneren eines Menschen. Primär dienen diese Geräte zur Vorsorge bzw. zur Analyse der Funktion und des Zustands der jeweiligen Organe und der Detektion oder dem Behandeln von bestimmten Krankheiten. Hierzu dienen seit vielen Jahrzehnten etwa Röntgen- oder Ultraschallgeräte. In zunehmendem Maße haben sich in den letzten Jahren neuere Methoden mit innovativen Geräten wie die Computertomographie oder die Magnetresonanztomographie etabliert. In diesem Zusammenhang bildet auch die Pränatalmedizin mittlerweile erhebliche Möglichkeiten, die Entwicklungen und Veränderungen beim ungeborenen Kind wie bei der Schwangeren zu erfassen. Die Entwicklung von Fotographien des Kindes im Mutterleib gehört mittlerweile praktisch zum Standard jeder Schwangerschaft. Diese Abbildungen des heranwachsenden Lebens, gewissermaßen als erste Kontaktaufnahme, sind bei werdenden Eltern besonders beliebt.

Ausgehend von diesen bestehenden technischen Möglichkeiten stellt sich der vorliegenden Erfindung die Aufgabe, ein Verfahren zur Herstellung eines dreidimensionalen Modells des Körpers oder eines Teils des Körpers eines im Mutterleib heranwachsenden Kindes und eine Vorrichtung hierfür zu schaffen, die insbesondere den werdenden Eltern über die reine Fotographie hinaus eine Möglichkeit bietet, sich vom heranwachsenden Leben ein nachhaltiges Bild zu machen.

Diese Aufgabe wird verfahrensgemäß dadurch gelöst, dass die Konturen des Körpers oder eines Teils des Körpers des im Mutterleib heranwachsenden Kindes individuell mittels eines Aufnahmegerätes erfasst werden und dass anhand der erfassten Daten über eine mechanische Fertigungseinheit ein dreidimensionales Modell des Kindes erstellt wird.

Zusammengeführt werden mit der vorliegenden Erfindung dabei das bisher an sich bekannte Aufnahmegerät zur Erfassung der individuellen Konturen des im Mutterleib heranwachsenden Kindes, sei es im Ganzen oder sei es nur in Körperpartien, etwa nur der Kopf, und die Möglichkeit, von dem heranwachsenden Kind ein dreidimensionales Modell zu erstellen. Kombiniert wird dieses Aufnahmegerät dabei mit einer mechanischen Fertigungseinheit, welche dazu dient, die vom Aufnahmegerät erfassten Daten zu den individuellen Konturen des Kindes in ein dreidimensionales Modell zu überführen. Ergebnis dieser über das Aufnahmegerät ausgeführten Analyse ist also nicht nur eine Fotographie, sondern ein dreidimensionales Modell, das es den werdenden Eltern, aber auch Ärzten ermöglicht, dauerhaftere Erkenntnisse über die Entwicklung und den Zustand des heranwachsenden Lebens im Mutterleib zu erhalten. Damit wird den werdenden Eltern ein erstes, einigermaßen reelles Abbild des heranwachsenden Kindes, ein Andenken oder ein Erinnerungsobjekt geboten. Angesichts der Dreidimensionalität dieses Modells gehen die damit einhergehenden Möglichkeiten deutlich über das hinaus, was eine Fotographie bieten kann.

Es wurde bereits ausgeführt, dass das erfindungsgemäße Verfahren über zwei Geräte oder Geräteteile in Form einer Aufnahme- wie einer Herstellvorrichtung für das Modell realisiert wird. In Hinblick auf die Kompatibilität der beiden Geräte oder -teile ist daran gedacht, dass ggf. die über das Aufnahmegerät erfassten Daten in Hinblick auf die Erstellung des dreidimensionalen Modells umgerechnet werden. Die über das Aufnahmegerät erfassten individuellen Daten des abzubildenden Menschen werden dabei ggf. intern und/oder extern auf einem Datenträger zwischengespeichert, umgerechnet und dann in Daten überführt, sodass mechanisch mittels der Fertigungsvorrichtung das dreidimensionale Modell erstellt werden kann.

Eine Variante der Erfindung sieht dabei vor, dass mit dem Aufnahmegerät die individuellen Konturen des abzubildenden Kindes optisch erfasst werden. Nach einer anderen Variante werden mit dem Aufnahmegerät die individuellen Konturen des abzubildenden Kindes akustisch erfasst.

Vorgeschlagen wird außerdem, dass die individuellen Konturen des abzubildenden Kindes mittels Röntgentechnik erfasst werden. So ist es z. B. möglich, das komplette Skelett dieses Menschen oder Teil davon, etwa die Kopfpartie mittels Röntgen- oder anderer Technik optisch zu erfassen und aus den dabei gewonnenen Daten eine konkrete Arbeitsanweisung für ein Fertigungsgerät zur Herstellung des dreidimensionalen Modells zu entwickeln.

Eine Alternative hierzu sieht vor, dass die individuellen Konturen des abzubildenden Kindes mittels Magnetresonanztomographie erfasst werden. Eine weitere Variante sieht vor, dass die individuellen Konturen des abzubildenden Kindes mittels Laparoskopie oder Ultraschalltechnik erfasst werden.

Was den zweiten Verfahrensschritt, nämlich die Herstellung des 3D-Modells betrifft, sind ebenfalls mehrere Varianten denkbar. Grundsätzlich wird hier zwischen zwei Techniken unterschieden. Einerseits kann das 3D-Modell aus einem Materialblock heraus im Wege des Abtragens geformt werden, andererseits ist es ebenso praktikabel, wenn das 3D-Modell aufgebaut wird, indem etwa flüssiges Material z. B. über Formkörper in eine bestimmte, dem reellen Vorbild entsprechende Form gegossen oder sonst wie eingefüllt und dann zum Erstarren gebracht wird. Auch ein Schichtaufbau ist denkbar.

Eine der ersten Variante entsprechende Verfahrensweise sieht vor, dass mit dem Fertigungsgerät das dreidimensionale Modell aus einem Block mechanisch heraus geformt wird.

Ein anderer Vorschlag hierzu sieht vor, dass mit dem Fertigungsgerät das dreidimensionale Modell aus einem Block mechanisch heraus geschnitten wird.

Eine Alternative hierzu wäre, dass mit dem Fertigungsgerät das dreidimensionale Modell aus einem Block mechanisch heraus gefräst wird.

Die zuvor genannte zweite Variante mit dem Aufbau des dreidimensionalen Modells wäre realisiert, wenn mit dem Fertigungsgerät das dreidimensionale Modell mechanisch aufgebaut wird, etwa durch Einfüllen einer später zum Erstarren gebrachten Flüssigkeit in eine Form oder dem schichtweisen Aufbau eines Modells.

Vorrichtungsgemäß wird die gestellte Aufgabe durch ein Aufnahmegerät zur individuellen Erfassung der Konturen des Körpers oder eines Teils des Körpers eines im Mutterleib heranwachsenden Kindes und eine mechanische Fertigungseinheit zur Erstellung eines dreidimensionalen Modells anhand der dabei erfassten Daten gelöst.

Kernstück der Vorrichtung ist also einerseits ein Aufnahmegerät zur optischen und/oder akustischen Aufnahme der individuellen Konturen des Menschen, für den ein dreidimensionales Modell hergestellt werden soll. Die dabei erfassten Daten werden direkt oder nach entsprechender Umrechnung bzw. Zwischenspeicherung über ein Fertigungsgerät dahingehend ausgewertet, dass nunmehr auf mechanische Weise ein dreidimensionales Modell des Menschen hergestellt wird. Vorzugsweise handelt es sich dabei um ein im Mutterleib heranwachsendes Kind.

Eine vorrichtungsgemäße Variante der Erfindung sieht dabei vor, dass das Aufnahmegerät und die Fertigungseinheit als separate Aggregate ausgebildet sind. Unter separat wird hier einerseits verstanden, dass zwei voneinander getrennt ausgebildete Vorrichtungsteile, nämlich ein Aufnahme- und ein Fertigungsgerät vorhanden sein können. Diese können im Bedarfsfall, d. h. z. B. zur Übermittlung der aufgenommenen Daten miteinander in Verbindung gebracht werden. Ebenso ist es möglich, die über das Aufnahmegerät ermittelten Daten hinsichtlich der individuellen Konturen des abzubildenden Menschen zunächst etwa auf einem mobilen Datenträger abzuspeichern und dann auf das andere Aggregat in Form des Fertigungsgerätes zu übertragen. Mit anderen Worten, Aufnahme- und Fertigungsgerät können auch örtlich getrennt voneinander eingesetzt werden, d. h. die Daten werden über individuelle Aufnahmegeräte erfasst, die etwa in gynäkologischen Praxen aufgestellt sind. In einem zweiten Schritt werden die Daten auf das Fertigungsgerät übertragen oder -spielt und in die dreidimensionalen Modelle umgesetzt. Damit muss vorteilhafterweise nicht in jeder gynäkologischen Praxis ein Fertigungsgerät vorgehalten werden.

Es ist aber ebenso daran gedacht, dass das Aufnahmegerät und das Fertigungsgerät als gemeinsames Aggregat ausgebildet sind. D. h. ein Teil des Aggregates dient zur optischen und/oder akustischen Erfassung der Konturen des Körpers oder der Teile des heranwachsenden Kindes, während der andere zur Herstellung des dreidimensionalen Modells dieses Kindes dient.

Die Erfindung zeichnet sich insbesondere dadurch aus, dass ein Verfahren und eine Vorrichtung zur Herstellung eines dreidimensionalen Modells des Körpers oder eines Teils des Körpers eines im Mutterleib heranwachsenden Kindes geschaffen ist, bei dem die Konturen des Körpers oder eines Teils dieses Körpers zunächst in einem ersten Schritten über ein Aufnahmegerät optisch und/oder akustisch erfasst werden und bei dem in einem zweiten Schritt über eine Fertigungseinheit mechanisch ein dreidimensionales Modell erstellt wird. Dabei werden die notwendigen Informationen und Daten optisch und/oder akustisch in an sich bekannter Weise erfasst, aber nicht (nur) in eine Fotographie umgesetzt, sondern weitergehend zur Herstellung eines kompletten oder Teilmodells in dreidimensionaler Form.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist.

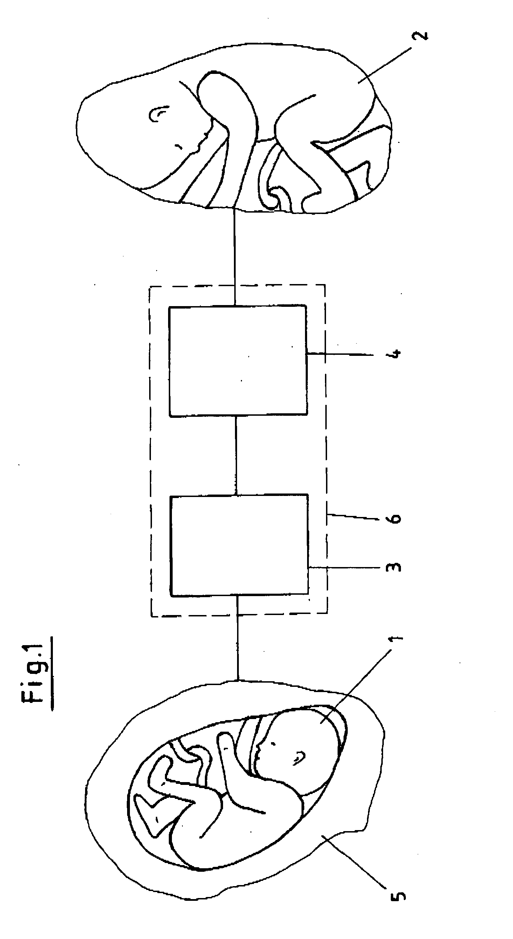

Figur 1 zeigt in Form eines groben Schemas den Ablauf des erfindungsgemäßen Verfahrens und den Aufbau der Vorrichtung. Demnach wird über das Aufnahmegerät 3 eine Aufnahme des im Mutterleib 5 heranwachsenden Kindes 1 hergestellt. Dessen Konturen werden komplett oder teilweise über das Aufnahmegerät 3 erfasst und dann an die Fertigungseinheit 4 weitergegeben. Über letztere wird dann das dreidimensionale Modell 2 des heranwachsenden Kindes 1, hier in kompletter Form hergestellt, wozu diverse mechanische Verfahren dienen können, bei denen dieses Modell 2 aus einer Form herausgeformt oder durch mechanischen Aufbau hergestellt wird. Die mit dem Bezugszeichen 6 versehene Linie deutet an, dass es sich bei der aus dem Aufnahmegerät 3 und der Fertigungseinheit 4 bestehenden Vorrichtung um ein gemeinsames Aggregat handeln kann, während es ebenso denkbar ist, dass Aufnahmegerät 3 und Fertigungseinheit 4 separat ausgebildet sind, zumal eine Fertigungseinheit 4 durchaus auch mit unterschiedlichsten Aufnahmegeräten und/oder Datenträgern zur Zwischenspeicherung kompatibel sein kann.

## Patentansprüche

1. Verfahren zur Herstellung eines dreidimensionalen Modells des Körpers oder eines Teils des Körpers eines Menschen,
**dadurch gekennzeichnet,**
**dass** die Konturen des Körpers oder eines Teils des Körpers eines im Mutterleib heranwachsenden Kindes individuell mittels eines Aufnahmegerätes erfasst werden und dass anhand der erfassten Daten über eine mechanische Fertigungseinheit ein dreidimensionales Modell dieses Kindes erstellt wird.

2. Verfahren nach Anspruch 1,
**dadurch gekennzeichnet,**
**dass** die über das Aufnahmegerät erfassten Daten in Hinblick auf die Erstellung des dreidimensionalen Modells umgerechnet werden.

3. Verfahren nach Anspruch 1,
**dadurch gekennzeichnet,**
**dass** mit dem Aufnahmegerät die individuellen Konturen des abzubildenden Kindes optisch erfasst werden.

4. Verfahren nach Anspruch 1,
**dadurch gekennzeichnet,**
**dass** mit dem Aufnahmegerät die individuellen Konturen des abzubildenden Kindes akustisch erfasst werden.

5. Verfahren nach Anspruch 1,
**dadurch gekennzeichnet,**
**dass** die individuellen Konturen des abzubildenden Kindes mittels Röntgentechnik erfasst werden.

6. Verfahren nach Anspruch 1,
**dadurch gekennzeichnet,**
**dass** die individuellen Konturen des abzubildenden Kindes mittels Magnetresonanztomographie erfasst werden.

7. Verfahren nach Anspruch 1,
**dadurch gekennzeichnet,**
**dass** die individuellen Konturen des abzubildenden Kindes mittels Laparoskopie erfasst werden.

8. Verfahren nach Anspruch 1,
**dadurch gekennzeichnet,**
**dass** die individuellen Konturen des abzubildenden Kindes mittels Ultraschalltechnik erfasst werden.

9. Verfahren nach Anspruch 1,
**dadurch gekennzeichnet,**
**dass** mit der Fertigungseinheit das dreidimensionale Modell aus einem Block mechanisch heraus geformt wird.

10. Verfahren nach Anspruch 1,
**dadurch gekennzeichnet,**
**dass** mit der Fertigungseinheit das dreidimensionale Modell aus einem Block mechanisch heraus geschnitten wird.

11. Verfahren nach Anspruch 1,
**dadurch gekennzeichnet,**
**dass** mit der Fertigungseinheit das dreidimensionale Modell aus einem Block mechanisch heraus gefräst wird.

12. Verfahren nach Anspruch 1,
**dadurch gekennzeichnet,**
**dass** mit der Fertigungseinheit das dreidimensionale Modell mechanisch aufgebaut wird.

13. Vorrichtung zur Durchführung des Verfahrens nach mindestens einem der Ansprüche 1-12,
**gekennzeichnet durch**
ein Aufnahmegerät (3) zur individuellen Erfassung der Konturen des Körpers oder eines Teils des Körpers eines im Mutterleib heranwachsenden Kindes (1) und eine mechanische Fertigungseinheit (4) zur Erstellung eines dreidimensionalen Modells (2) dieses Kindes anhand der dabei erfassten Daten.

14. Vorrichtung nach Anspruch 13,
**dadurch gekennzeichnet,**
**dass** das Aufnahmegerät (3) und die Fertigungseinheit (4) als separate Aggregate ausgebildet sind.

15. Vorrichtung nach Anspruch 13,
**dadurch gekennzeichnet,**
**dass** das Aufnahmegerät (3) und die Fertigungseinheit (4) als gemeinsames Aggregat (6) ausgebildet sind.
